# EUROPÄISCHE PATENTSCHRIFT

(11) **EP 2 775 121 B1**
(45) Veröffentlichungstag und Bekanntmachung des Hinweises auf die Patenterteilung: **03.10.2018**
(21) Anmeldenummer: 14157553.0
(22) Anmeldetag: 04.03.2014
(51) Int. Cl.: F02D 9/10, F02D 11/08, F16K 1/22, F16K 31/126, F16K 31/165, F16K 31/00

(54) **Klappeneinrichtung**
Flap device
Dispositif à papillon

(30) Priorität: 08.03.2013 DE 102013203961
(43) Veröffentlichungstag der Anmeldung: 10.09.2014
(73) Patentinhaber: Mahle International GmbH, 70376 Stuttgart (DE)
(72) Erfinder: Kaiser, Sven Alexander, 71364 Winnenden (DE)
(74) Vertreter: BRP Renaud & Partner mbB Rechtsanwälte Patentanwälte Steuerberater

(56) Entgegenhaltungen:
- EP-A1- 1 098 124
- EP-A2- 0 851 106
- FR-A1- 2 715 437
- GB-A- 1 193 190
- US-A- 2 315 775
- US-A- 4 504 038
- US-A1- 2005 109 970
- US-A1- 2009 266 334

## Beschreibung

Die vorliegende Erfindung betrifft eine Klappeneinrichtung zum Steuern einer Fluidströmung einer Brennkraftmaschine, mit den Merkmalen des Oberbegriffs des Anspruchs 1.

Aus der DE 10 2007 003 317 A1 ist eine Klappeneinrichtung bekannt, bei der ein Klappengehäuse einen von einer Abgasströmung in einer Axialrichtung durchströmbaren Kanalabschnitt in einer Umfangsrichtung umschließt. Zum Steuern eines durchströmbaren Querschnitts des Kanalabschnitts ist im Klappengehäuse eine Klappe um eine quer zur Axialrichtung verlaufende Schwenkachse verschwenkbar angeordnet. Eine Stelleinrichtung zum Antreiben der Klappe weist eine linear verstellbare Antriebswelle auf, wobei eine Kopplungseinrichtung vorgesehen ist, die eine drehfest mit der Klappe verbundene, koaxial zur Schwenkachse verlaufende Klappenwelle mit der koaxial zur Schwenkachse ausgerichteten Antriebswelle koppelt, derart, dass sie lineare Bewegungen der Antriebswelle in Drehbewegungen der Klappenwelle umwandelt. Die bekannte Klappeneinrichtung arbeitet dabei mit einem elektromotorischen Antrieb zum linearen Verstellen der Antriebswelle.

Ein Linear-Schrittmotor mit axial bewegbarer Antriebswelle ist beispielsweise aus der DE 199 41 309 A1 bekannt.

Aus der DE 100 15 978 A1 ist eine weitere Klappeneinrichtung bekannt, bei der ein Rotationsmotor verwendet wird, um eine Antriebswelle drehend anzutreiben. Dabei ist die Antriebswelle als Spindel konfiguriert, auf die eine Mutter aufgesetzt ist, die einen davon radial abstehenden Zapfen trägt. Die Mutter ist in einer stehenden Axialführung drehfest gehalten, so dass eine Rotation der Spindel eine Axialbewegung der Mutter entlang der Spindel bewirkt. Der Zapfen steht dabei mit einer Kulisse in Eingriff, die an einer Klappenwelle ausgebildet ist. Die Kulisse ist dabei schraubenförmig geformt, so dass eine Axialverstellung des Zapfens zu einer Rotation der mit der Klappenwelle verbundenen Klappe führt, wobei die Klappe koaxial zur Drehachse der Spindel schwenkt.

Eine gattungsgemäße Klappeneinrichtung ist aus der EP 1 098 124 A1 bekannt, bei der zum Antreiben der Klappe eine als pneumatisch ansteuerbare Druckdose ausgestaltete Stelleinrichtung zum Einsatz kommt. Bei der bekannten Klappeneinrichtung ist die Kopplungseinrichtung im Inneren der Klappe ausgebildet, also innerhalb des Klappengehäuses.

Die vorliegende Erfindung beschäftigt sich mit dem Problem, für eine Klappeneinrichtung der eingangs genannten Art eine verbesserte oder zumindest eine andere Ausführungsform anzugeben, die sich insbesondere durch einen preiswerten Aufbau auszeichnet. Gleichzeitig ist angestrebt, die Klappeneinrichtung so zu konfigurieren, dass eine Baugruppe, welche mit einer derartigen Klappeneinrichtung ausgestattet ist, einfach vormontierbar und einfach in die zugehörige Peripherie der Brennkraftmaschine eingebaut werden kann.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Stelleinrichtung als hydraulisch oder pneumatisch ansteuerbare Druckdose auszugestalten. Eine Druckdose arbeitet ohne elektrische Energieversorgung, was den Aufwand zur Realisierung der Klappeneinrichtung reduziert. Ebenso vereinfacht sich die Montage einer damit ausgestatteten Baugruppe an der Brennkraftmaschine, da keine elektrischen Kontakte verlegt und hergestellt werden müssen. Des Weiteren arbeiten Druckdosen sehr zuverlässig. Auch ist die Versorgung mit dem erforderlichen Steuerdruck relativ einfach realisierbar, da im Bereich einer Brennkraftmaschine unterschiedlichste hydraulische oder pneumatische Systeme zur Verfügung stehen, die zur Bereitstellung des gewünschten Steuerdrucks genutzt werden können.

Erfindungsgemäß weist die Druckdose in einem Druckdosengehäuse einen Steuerraum auf, der durch eine elastische Membran begrenzt ist, die fest mit der Antriebswelle verbunden ist, wobei das Druckdosengehäuse einen mit dem Steuerraum fluidisch verbundenen Steueranschluss aufweist, über den der Steuerraum zum Verstellen der Membran mit einem Überdruck oder mit einem Unterdruck beaufschlagbar ist. Hierdurch besitzt die Druckdose einen besonders einfachen, leicht herstellbaren Aufbau, der sich durch eine zuverlässige Funktionsweise auszeichnet. Je nach dem, ob zum Ansteuern der Membran ein Überdruck oder ein Unterdruck im Steuerraum erzeugt wird, handelt es sich bei der verwendeten Druckdose entweder um eine Unterdruckdose oder um eine Überdruckdose.

Gemäß einer vorteilhaften Weiterbildung kann in der Druckdose eine mit der Membran zusammenwirkende Rückstellfeder oder Vorspannfeder vorgesehen sein, mit der die Membran in eine erste Endstellung vorgespannt ist. Ohne Druckbeaufschlagung des Steuerraums nimmt die Membran dann diese erste Endstellung selbsttätig ein. Durch die Druckbeaufschlagung des Steuerraums kann die Membran aus der ersten Endstellung entgegen der Federkraft der Rückstell- oder Vorspannfeder verstellt werden, maximal bis in eine zweite Endstellung.

Erfindungsgemäß ist die Antriebswelle durch einen Wandabschnitt des Druckdosengehäuses aus dem Druckdosengehäuse herausgeführt, wobei zwischen der Antriebswelle und dem Wandabschnitt eine Drehmoment abstützende Linearführung ausgebildet ist. Mit anderen Worten, zwischen der mit der Membran verbundenen Antriebswelle und dem Druckdosengehäuse erfolgt eine Drehmomentabstützung mittels einer Linearführung. Hierdurch wird erreicht, dass die Antriebswelle, die durch die Hubbewegungen der Membran linear angetrieben ist, keine Rotationsbewegung um ihre Längsmittelachse durchführen kann, die sich koaxial zur Schwenkachse der Klappe erstreckt. Drehmomente, welche die Antriebswelle drehend antreiben, entstehen in der Antriebswelle als Reaktion zu den Drehmomenten, die innerhalb der Kopplungseinrichtung beim Umwandeln der linearen Bewegung der Antriebswelle in eine Drehbewegung der Klappenwelle quasi als Aktion entstehen. Durch die Drehmomentabstützung der Antriebswelle am Druckdosengehäuse ist die Membran völlig von Drehmomenten entlastet, so dass in der Druckdose eine herkömmliche Membran mit herkömmlicher Anbindung zur Antriebswelle verwendet werden kann.

Die Linearführung kann beispielsweise mit wenigstens einer Nut-Feder-Führung realisiert sein. Eine derartige Nut-Feder-Führung lässt sich dabei einfach oder zweifach oder mehrfach realisieren, um das Drehmoment der Antriebswelle in der Umfangsrichtung an einer Stelle oder an zwei Stellen oder an mehreren Stellen am Druckdosengehäuse abzustützen. Dabei kann die jeweilige Nut in der Antriebswelle ausgebildet sein, so dass die darin eingreifende Feder dann am Druckdosengehäuse angeordnet ist. Ebenso ist es möglich, die Feder an der Antriebswelle auszubilden und die zugehörige Nut am Druckdosengehäuse vorzusehen. Letztere Variante scheint im Hinblick auf die Möglichkeit, größere Drehmomente abzustützen, vorteilhaft zu sein. Die Drehmoment abstützende Kontur des Druckdosengehäuses, also insbesondere die jeweilige Nut oder die jeweilige Feder, kann dabei vorzugsweise unmittelbar an einem Öffnungsrand ausgeformt sein, der eine Durchgangsöffnung in der Umfangsrichtung einfasst, durch welche die Antriebswelle aus dem Druckdosengehäuse herausgeführt ist.

Andere Linearführungen, die eine Drehmomentabstützung bewirken, lassen sich beispielsweise mittels einer im Querschnitt mehrkantigen Außenkontur der Antriebswelle realisieren, die mit einer dazu komplementären, mehrkantigen Innenkontur an vorstehend genanntem Öffnungsrand zusammenwirkt.

Erfindungsgemäß weist das Druckdosengehäuse einen Grundkörper und einen Deckel aufweisen, der eine der Klappe zugewandte Montageöffnung des Grundkörpers verschließt. Hierdurch ergibt sich ein einfacher Aufbau für die Druckdose, was deren Herstellung preiswert macht. Vorzugsweise enthält der Grundkörper den Steuerraum. Ferner weist der Grundkörper bevorzugt den Steueranschluss auf. Die Membran ist zweckmäßig zwischen dem Grundkörper und dem Deckel geklemmt, so dass die Membran durch das Anbringen des Deckels am Grundkörper fixiert wird. Der Deckel weist dagegen den Wandabschnitt des Druckdosengehäuses auf, der die von der Antriebswelle durchsetzte Durchgangsöffnung enthält. Zweckmäßig können der Grundkörper und der Deckel miteinander verclipst sein. Wodurch beispielsweise eine werkzeugfreie Montage ermöglicht wird.

Erfindungsgemäß ist der Deckel integral am Klappengehäuse ausgeformt. Auf diese Weise wird die Druckdose durch das Anbringen des Grundkörpers mit eingesetzter Membran am Deckel bzw. am Klappengehäuse vervollständigt. Insgesamt lässt sich dadurch die Klappeneinrichtung besonders einfach realisieren. Beispielsweise können zusätzliche Befestigungsmaßnahmen und Befestigungselemente entfallen, mit denen die Druckdose am Klappengehäuse befestigt werden muss.

Bei einer anderen vorteilhaften Ausführungsform kann die Kopplungseinrichtung wenigstens eine sich koaxial zur Schwenkachse schraubenförmig erstreckende, radial offene Schraubenführung aufweisen, in die ein Bolzen radial eingreift. Eine derartige helixartige Schraubenführung erzwingt bei einer Linearverstellung zwischen Bolzen und Schraubenführung eine Drehverstellung zwischen Bolzen und Schraubenführung. Die Schraubenführung und zugehöriger Bolzen können beispielsweise so angeordnet sein, dass der Bolzen radial nach außen oder radial nach innen in die Schraubenführung eingreift. Ferner kann vorgesehen sein, die Schraubenführung bezüglich der Klappenwelle oder bezüglich der Antriebswelle drehfest anzuordnen, wobei dann der zugehörige Bolzen entweder bezüglich der Antriebswelle oder bezüglich der Klappenwelle drehfest angeordnet ist.

Die Kopplungseinrichtung kann dabei entweder nur eine einzige helixartige Schraubenführung oder mehrere, koaxial zueinander angeordnete, axial ineinandergreifende helixartige Schraubenführungen aufweisen. Besonders zweckmäßig ist dabei eine Konfiguration, bei welcher genau zwei helixartige Schraubenführungen vorgesehen sind, die in der Umfangsrichtung um 180° zueinander versetzt angeordnet sind. Demnach sind die beiden Schraubenführungen quasi nach Art einer Doppelhelix angeordnet. Hierdurch ergibt sich eine in der Umfangsrichtung verteilte, vorzugsweise symmetrische Drehmomentabstützung innerhalb der Kopplungseinrichtung zwischen den Bolzen und den zugehörigen Schraubenführungen.

Bei einer anderen vorteilhaften Weiterbildung kann der Bolzen drehfest mit der Antriebswelle verbunden sein und radial nach außen in die jeweilige Schraubenführung eingreifen, die drehfest mit der Klappenwelle verbunden ist. Eine derartige Bauform ist besonders einfach realisierbar.

Der jeweilige Bolzen kann in Form eines separaten Bauteils an die Antriebswelle angebaut sein. Beispielsweise kann die Antriebswelle hierzu eine Bolzenöffnung aufweisen, in die der jeweilige Bolzen eingesteckt ist. Zur Realisierung von zwei diametral angeordneten, jeweils nach außen abstehenden Bolzen, die mit zwei Schraubenführungen zusammenwirken, kann ein einziger Bolzenkörper verwendet werden, der in eine die Antriebswelle durchdringende Bolzenöffnung so eingesetzt ist, dass er mit seinen Längsenden die beiden von der Antriebswelle abstehenden Bolzen bildet.

Gemäß einer anderen vorteilhaften Ausführungsform kann die jeweilige Schraubenführung integral an der Klappenwelle ausgeformt sein, wodurch sich der Zusammenbau der Klappeneinrichtung vereinfacht.

Gemäß einer anderen vorteilhaften Weiterbildung kann die Kopplungseinrichtung ein Führungsgehäuse aufweisen, das drehfest mit der Klappenwelle verbunden ist, das die wenigstens eine Schraubenführung aufweist und das an einer der Stelleinrichtung zugewandten Seite eine Einführöffnung aufweist, durch welche die Antriebswelle mit dem jeweiligen Bolzen in das Führungsgehäuse eingeführt ist. Auch diese Maßnahme führt zu einem einfach realisierbaren Aufbau. Insbesondere kann das Führungsgehäuse integral an der Klappenwelle ausgeformt sein.

Bei einer Weiterbildung kann das Führungsgehäuse abgesehen von der Einführöffnung nach außen geschlossen ausgestaltet sein, wobei die Einführöffnung mit einer Kappe verschlossen ist, die eine Durchgangsöffnung enthält, durch welche die Antriebswelle hindurchgeführt ist. Somit lässt sich ein Innenraum des Führungsgehäuses nach außen hermetisch verschließen, beispielsweise um eine Verschmutzung der jeweiligen Schraubenführung zu verhindern.

Gemäß einer zweckmäßigen Weiterbildung kann die Kappe im Bereich der Durchgangsöffnung eine Radialdichtung aufweisen, die außen an der Antriebswelle anliegt. Hierdurch kann die Abdichtung des Innenraums des Führungsgehäuses zusätzlich verbessert werden. Die Antriebswelle kann gemäß einer bevorzugten Bauform zumindest in einem Längsabschnitt, der sich im Betrieb der Klappeneinrichtung, also bei der Linearverstellung der Antriebswelle, innerhalb der Durchgangsöffnung relativ zum Führungsgehäuse bewegt, mit einem kreiszylindrischen Querschnitt ausgestattet sein. Hierdurch lässt sich die Abdichtung der Durchgangsöffnung mit Hilfe einer Radialdichtung signifikant verbessern.

Bei einer anderen vorteilhaften Ausführungsform kann der durchströmbare Querschnitt des Kanalabschnitts in einer parallel zur Schwenkachse verlaufenden Breitenrichtung mindestens zweimal oder mindestens dreimal, vorzugsweise vier- oder fünfmal, größer sein als in einer quer dazu verlaufenden Höhenrichtung. Der durchströmbare Querschnitt des Kanalabschnitts wird dadurch flach, wodurch sich für die Klappeneinrichtung eine kompakte Bauform realisieren lässt.

Zusätzlich oder alternativ kann vorgesehen sein, dass sich der durchströmbare Querschnitt des Kanalabschnitts in einer parallel zur Schwenkachse verlaufenden Breitenrichtung mit zunehmendem Abstand von der Stelleinrichtung verjüngt. Hierdurch wird für den Kanalabschnitt eine spezielle Geometrie geschaffen, die für bestimmte Anwendungsformen vorteilhaft sein kann. Die Verjüngung des durchströmbaren Querschnitts erfolgt zweckmäßig kontinuierlich.

Die Klappe ist zweckmäßig komplementär zum durchströmbaren Querschnitt geformt, um den Querschnitt in einer Schließstellung möglichst weitgehend verschließen zu können.

Gemäß einer vorteilhaften Ausführungsform erstreckt sich die Schwenkachse im Wesentlichen mittig zum durchströmbaren Querschnitt, wobei sich die Klappe dann beiderseits der Schwenkachse erstreckt, wodurch die Klappe quasi als Schmetterlingsklappe konfiguriert ist.

Bei einer anderen Ausführungsform kann die Klappenwelle proximal zur Stelleinrichtung und distal zur Stelleinrichtung jeweils einen Lagerabschnitt aufweisen, der in einem Lagerbereich des Gehäuses bzw. des Kanalabschnitts parallel zur Axialrichtung eingesetzt ist. Auch diese Maßnahme führt zu einer vereinfachten Herstellung der Klappeneinrichtung.

Die Klappe ist vorzugsweise integral an der Klappenwelle ausgeformt, wodurch auch hier eine einfache Realisierbarkeit erzielt werden kann.

Eine bevorzugte Anwendung der Klappeneinrichtung wird in einer Frischluftanlage gesehen, beispielsweise als Drosselklappeneinrichtung. Eine derartige frischluftseitige Anordnung der Klappeneinrichtung hat den Vorteil, dass viele Komponenten aus einem Kunststoff hergestellt werden können. Beispielsweise können das Klappengehäuse, die Klappe und das Druckdosengehäuse aus Kunststoff hergestellt werden. Zusätzlich können auch die Klappenwelle und die Antriebswelle aus Kunststoff hergestellt werden. Schließlich lässt sich außerdem die Kopplungseinrichtung aus Kunststoff preiswert herstellen.

Erfindungsgemäß ist die Kopplungseinrichtung außerhalb eines Gehäuses der Stelleinrichtung angeordnet. Hierdurch ist es möglich, quasi beliebige bekannte Stelleinrichtungen zu verwenden, so dass auf preiswerte, in der Praxis bewährte Ausführungsformen von Stelleinrichtungen zurückgegriffen werden kann. Hierdurch gestaltet sich die Klappeneinrichtung vergleichsweise preiswert.

Erfindungsgemäß ist die Kopplungseinrichtung axial zwischen dem Gehäuse der Stelleinrichtung und dem Klappengehäuse angeordnet. Hierdurch ergibt sich eine sehr schlanke und einfach montierbare Bauform.

Gemäß einer weiteren Ausführungsform kann die Kopplungseinrichtung ein separates oder eigenes Gehäuse aufweist, das mit der Klappenwelle drehfest verbunden ist. Hierdurch lässt sich die Kopplungseinrichtung beispielsweise einfach gegen Verschmutzung schützen. Das Gehäuse der Kopplungseinrichtung ist dabei insbesondere zusätzlich und separat zum Klappengehäuse und/oder zu einem Gehäuse der Stelleinrichtung vorgesehen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine isometrische Ansicht einer Klappeneinrichtung,
- Fig. 2: eine isometrische Ansicht einer Stelleinrichtung,
- Fig. 3: isometrische Ansichten der Klappeneinrichtung im Bereich der Stelleinrichtung bei verschiedenen Betriebszuständen a, b und c,
- Fig. 4: eine isometrische Ansicht der Klappeneinrichtung im Bereich der Stelleinrichtung, bei einer anderen Ausführungsform,
- Fig. 5: eine isometrische, auseinandergezogene Darstellung der Klappeneinrichtung aus Fig. 4,
- Fig. 6: eine isometrische Ansicht der Stelleinrichtung bei einer weiteren Ausführungsform.

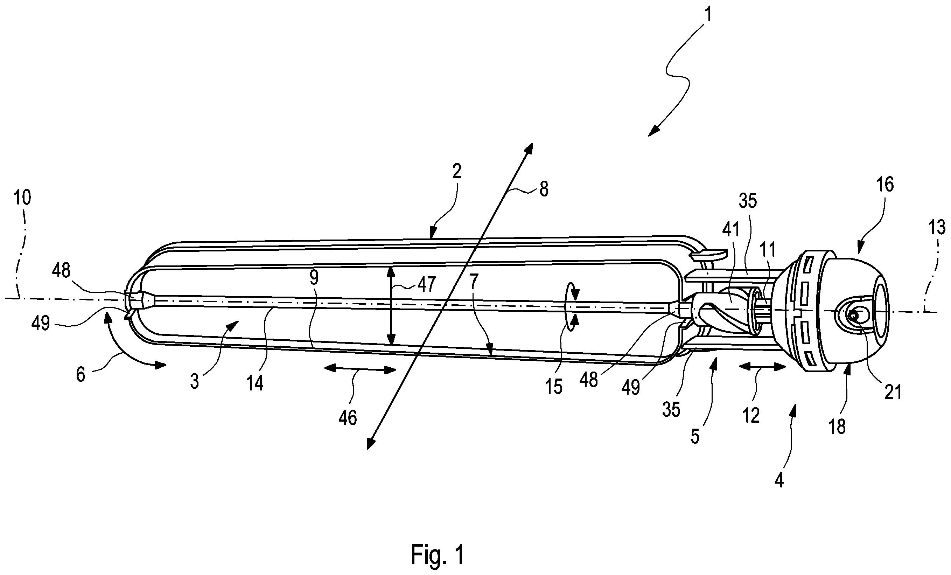

Entsprechend Fig. 1 umfasst eine Klappeneinrichtung 1, mit deren Hilfe eine Fluidströmung einer Brennkraftmaschine gesteuert werden kann, ein Klappengehäuse 2, zumindest eine Klappe 3, eine Stelleinrichtung 4 und eine Kopplungseinrichtung 5. Das Klappengehäuse 2 umschließt in einer Umfangsrichtung 6 zumindest einen Kanalabschnitt 7, der von der jeweiligen Fluidströmung in einer Axialrichtung 8 durchströmbar ist. Zweckmäßig strömt dabei die gesamte Fluidströmung durch den Kanalabschnitt 7. Die Klappe 3 ist zum Steuern eines durchströmbaren Querschnitts 9 des Kanalabschnitts 7 um eine Schwenkachse 10 im Klappengehäuse 2 verschwenkbar angeordnet. Die Schwenkachse 10 erstreckt sich dabei quer, also senkrecht zur Axialrichtung 8. Die Stelleinrichtung 4 dient zum Antreiben der Klappe 3 und weist eine linear verstellbare Antriebswelle 11 auf. Eine lineare Bewegungsrichtung 12 der Antriebswelle 11 verläuft dabei parallel zu einer Längsmittelachse 13 der Antriebswelle 11, die koaxial zur Schwenkachse 10 verläuft, also mit dieser zusammenfällt.

Die Kopplungseinrichtung 5 weist eine drehfest mit der Klappe 3 verbundene Klappenwelle 14 auf, die sich koaxial zur Schwenkachse 10 erstreckt. Die Kopplungseinrichtung 5 koppelt die Klappenwelle 14 mit der Antriebswelle 11. Klappenwelle 14 und Antriebswelle 11 sind dabei koaxial zueinander bzw. koaxial zur Schwenkachse 10 ausgerichtet. Die Kopplung zwischen der Klappenwelle 14 und der Antriebswelle 11 mit Hilfe der Kopplungseinrichtung 5 erfolgt dabei so, dass die Kopplungseinrichtung 5 die linearen Bewegungen 12 der Antriebswelle 11 in Drehbewegungen 15 der Klappenwelle 14 umwandelt.

Bei den Ausführungsformen der Figuren 1 bis 5 ist die Stelleinrichtung 4 als Druckdose 16 ausgestaltet, die hydraulisch oder pneumatisch angesteuert werden kann. Im Unterschied dazu zeigt Fig. 6 eine Ausführungsform, bei welcher die Stelleinrichtung 4 als temperaturgesteuertes Wachsdehnelement 17 ausgestaltet ist. Die nachfolgende Beschreibung bezieht sich explizit nur auf die Variante mit der Druckdose 16 als Stelleinrichtung 4. Es ist jedoch klar, dass alle Merkmale ohne direkten Bezug zur Druckdose 16 auch bei der Variante mit dem Wechseldehnelement 17 als Stelleinrichtung 4 realisierbar sind und dass auch Merkmale mit direktem Bezug zur Druckdose 16 grundsätzlich auch beim Wachsdehnelement 17 realisierbar sind. Insgesamt ist die nachfolgende Beschreibung auch implizit auf die Variante mit dem Wachsdehnelement 17 als Stelleinrichtung 4 bezogen.

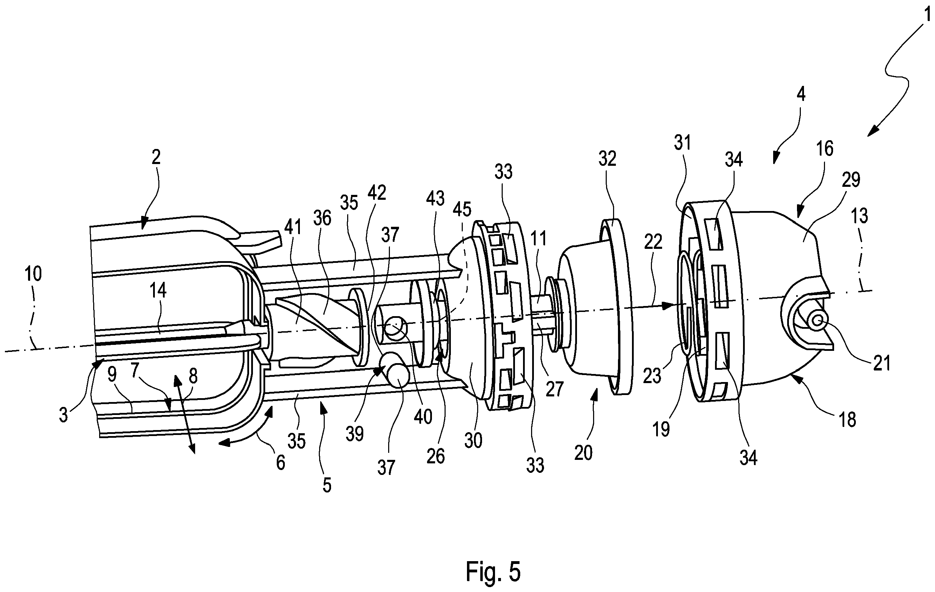

Entsprechend den Figuren 1 bis 5 umfasst die Druckdose 16 ein Druckdosengehäuse 18, das gemäß Fig. 5 einen Steuerraum 19 enthält. Dieser ist im Druckdosengehäuse 18 durch eine elastische Membran 20 begrenzt, die mit der Antriebswelle 11 fest verbunden ist. Das Druckdosengehäuse 18 weist außerdem einen Steueranschluss 21 auf, der mit dem Steuerraum 19 fluidisch verbunden ist. Über den Steueranschluss 21 kann der Steuerraum 19 mit einem Überdruck oder mit einem Unterdruck beaufschlagt werden, was zu einem entsprechenden Hub 22 der Membran 20 führt. Gemäß Fig. 5 ist der Hub 22 der Membran 20 so orientiert, dass sich die Membran 20 dabei in den Steuerraum 19 hinein bewegt, also das Volumen des Steuerraums 19 reduziert. Dementsprechend wird der Steuerraum 19 zum Verstellen der Membran 20 mit einem Unterdruck beaufschlagt. Dementsprechend handelt es sich bei der hier gezeigten, bevorzugten Ausführungsform um eine Unterdruckdose 16. Im Steuerraum 19 ist gemäß Fig. 5 außerdem eine Rückstellfeder 23 angeordnet, welche die Membran 20 aus dem Steuerraum 19, also entgegen dem Hub 22, antreibt.

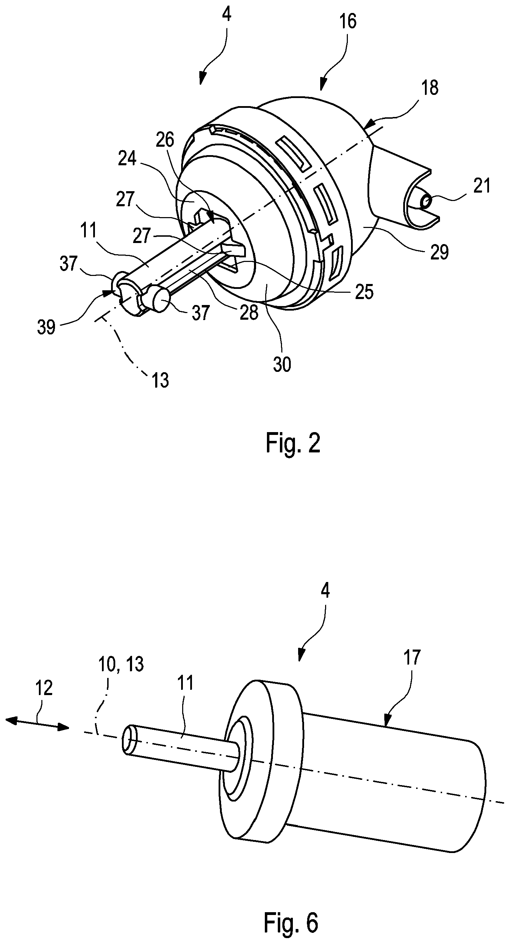

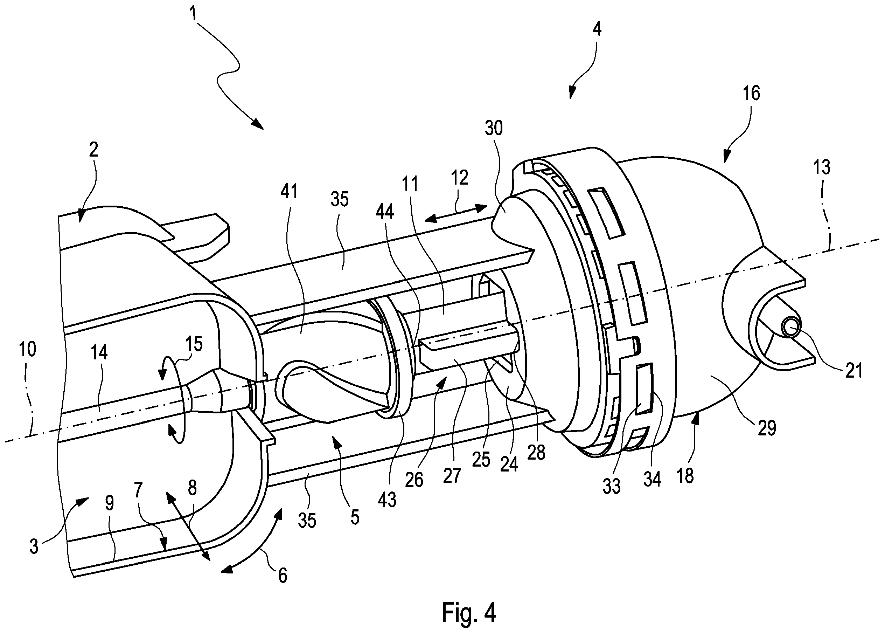

Gemäß den Figuren 2 und 4 ist die Antriebswelle 11 durch einen Wandabschnitt 24 des Druckdosengehäuses 18 aus dem Druckdosengehäuse 18 herausgeführt. Hierzu enthält der Wandabschnitt 24 eine Durchgangsöffnung 25, die von der Antriebswelle 11 durchsetzt ist. Zwischen der Antriebswelle 11 und dem Wandabschnitt 24 ist eine Linearführung 26 ausgebildet, die ein Drehmoment zwischen Antriebswelle 11 und Druckdosengehäuse 18 abstützt. Bei den hier gezeigten Beispielen ist die Linearführung 26 als doppelte bzw. zweifache Nut-Feder-Führung konzipiert, bei der jeweils eine Feder 27 in eine Nut 28 eingreift. Bei der in Fig. 2 gezeigten Ausführungsform sind die beiden Federn 27 am Wandabschnitt 24 bzw. an einem die Durchgangsöffnung 25 einfassenden Öffnungsrand ausgebildet, während die beiden Nuten 28 an der Antriebswelle 11 ausgebildet sind und sich parallel zur Längsmittelachse 13 der Antriebswelle 11 erstrecken. Bei der in Fig. 4 gezeigten Ausführungsform sind dagegen die beiden Federn 27 an der Antriebswelle 11 ausgeformt, wobei sie sich parallel zur Längsmittelachse 13 der Antriebswelle 11 erstrecken. Die zugehörigen Nuten 28 sind hierbei am Wandabschnitt 24 bzw. am Öffnungsrand der Durchgangsöffnung 25 ausgebildet.

Bei den hier gezeigten Ausführungsformen besitzt das Druckdosengehäuse 18 einen Grundkörper 29 und einen Deckel 30, der eine Montageöffnung 31 des Grundkörpers 29 verschließt, wobei diese Montageöffnung 31 der Klappe 3 zugewandt ist. Zweckmäßig enthält der Grundkörper 29 den Steuerraum 19 und die Rückstellfeder 23. Die Membran 20 bildet bezüglich des Grundkörpers 29 und des Deckels 30 ein separates Bauteil und ist zwischen dem Grundkörper 29 und dem Deckel 30 eingeklemmt. Zweckmäßig wird die Membran 20 an einem Halterand 32 zwischen entsprechenden Ringstufen des Grundkörpers 29 und des Deckels 30 axial, also parallel zur Längsmittelachse 13 der Antriebswelle 11 geklemmt bzw. verspannt. Dabei erfolgt die Fixierung der Membran 20 am Grundkörper 29 durch die Fixierung des Deckels 30 am Grundkörper 29. Beispielsweise kann hierzu der Grundkörper 29 mit dem Deckel 30 verrastet oder verclipst sein. Entsprechende Rastnasen 33 des Deckels 30 greifen hierzu in dazu komplementäre Rastöffnungen 34 des Grundkörpers 29 ein. Der Deckel 30 weist den Wandabschnitt 24 und die Durchgangsöffnung 25 auf. Gemäß den bevorzugten Ausführungsformen der Figuren 1 und 3 bis 5 ist der Deckel 30 integral am Klappengehäuse 2 ausgeformt. Beispielsweise kann der Deckel 30 hierzu mit Hilfe von zwei parallel zur Schwenkachse 10 verlaufenden Stegen 35 mit dem Klappengehäuse 2 bzw. mit dem Kanalabschnitt 7 verbunden sein.

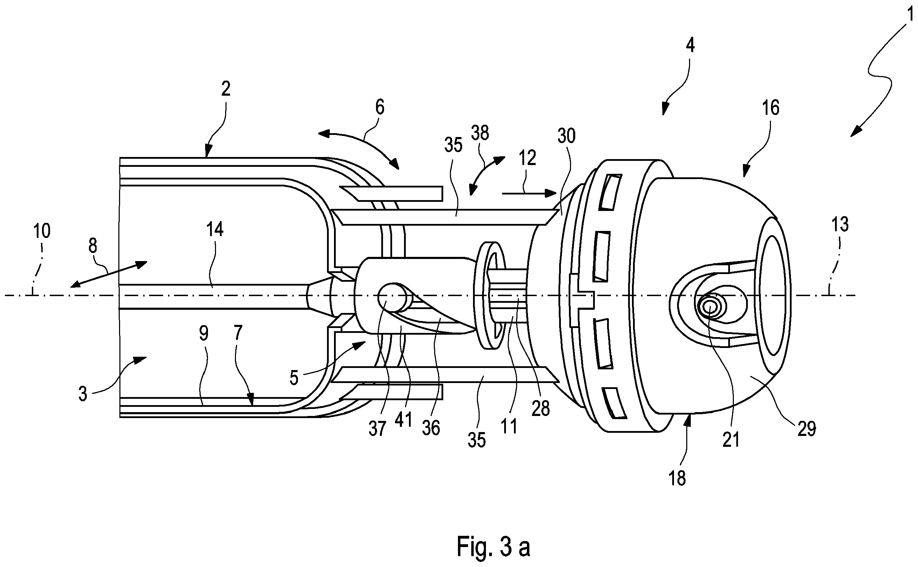

Gemäß den Figuren 1 und 3 bis 5 umfasst die Kopplungseinrichtung 5 zumindest eine Schraubenführung 36, in die ein Bolzen 37 eingreift. Bei den hier gezeigten Ausführungsformen sind zwei derartige Schraubenführungen 36 vorgesehen, die in der Umfangsrichtung 38 der Antriebswelle 11 um 180° zueinander versetzt angeordnet sind. Die jeweilige Schraubenführung 36 erstreckt sich dabei koaxial zur Schwenkachse 10 schraubenförmig und ist dabei bezüglich der Schwenkachse 10 radial offen. Die Figuren 1, 4 und 5 zeigen dabei eine Variante, bei welcher die jeweilige Schraubenführung 36 nur radial innen offen ist, während sie radial außen geschlossen ist. Also zeigen diese Ausführungsformen eine nur einseitig radial offene Schraubenführung 36. Im Unterschied dazu zeigen die Figuren 3a bis 3c eine Ausführungsform, bei welcher die jeweilige Schraubenführung 36 radial nach innen und radial nach außen offen ist, also radial durchgängig konzipiert ist. Die jeweilige Schraubenführung 36 erstreckt sich helixartig. Die beiden Schraubenführungen erstrecken sich relativ zueinander nach Art einer Doppelhelix.

Bei den hier gezeigten Ausführungsformen ist der jeweilige Bolzen 37 drehfest mit der Antriebswelle 11 verbunden, wobei er von der Antriebswelle 11 radial nach außen absteht. Die jeweilige Schraubenführung 36 ist drehfest mit der Klappe 3 verbunden und ist bezüglich der Antriebswelle 11 radial außen angeordnet. Dementsprechend greift der jeweilige Bolzen 37 nach außen in die jeweilige Schraubenführung 36 ein. Bei den hier gezeigten Ausführungsformen sind die beiden Bolzen 36 bezüglich der Längsmittelachse 13 der Antriebswelle 11 diametral gegenüberliegend angeordnet und durch die beiden Längsenden eines einzigen, gemeinsamen Bolzenkörpers 39 gebildet. Zur Aufnahme des Bolzenkörpers 39 besitzt die Antriebswelle 11 eine Durchgangsöffnung 40, durch die der Bolzenkörper 39 hindurchgeführt ist und darin so positioniert ist, dass seine Längsenden 37 radial von der Antriebswelle 11 abstehen und dadurch die beiden Bolzen 37 bilden.

Bei den hier gezeigten Ausführungsformen umfasst die Kopplungseinrichtung 5 ein Führungsgehäuse 41, das drehfest mit der Klappenwelle 14 verbunden ist und das die Schraubenführungen 36 aufweist. Das Führungsgehäuse 41 weist an einer der Stelleinrichtung 4 zugewandten Seite eine Einführöffnung 42 auf, durch welche die Antriebswelle 11 mit den Bolzen 37 in das Führungsgehäuse 41 eingeführt ist, derart, dass im Inneren des Führungsgehäuses 41 der jeweilige Bolzen 37 radial in die zugehörige Schraubenführung 36 eingreift.

Bei der in den Figuren 3a bis 3c gezeigten Ausführungsform ist das Führungsgehäuse 41 durch die durchgängig konzipierten Schraubenführungen 36 radial offen. Im Unterschied dazu ist das Führungsgehäuse 41 bei den Ausführungsformen der Figuren 1, 4 und 5 abgesehen von der Einführöffnung 42 nach außen verschlossen. Zum Verschließen der Einführöffnung 42 ist außerdem eine Kappe 43 vorgesehen, die eine Durchgangsöffnung 44 enthält, durch welche die Antriebswelle 11 hindurchgeführt ist. Im Bereich dieser Durchgangsöffnung 44 kann die Kappe 43 eine Radialdichtung 45 enthalten, die an der Außenkontur der Antriebswelle 11 anliegt. Die Außenkontur der Antriebswelle 11 ist in einem Axialabschnitt der Antriebswelle 11, der im Rahmen der Linearverstellungen 12 der Antriebswelle 11 relativ zur Kappe 43 bewegt wird, zylindrisch, vorzugsweise kreiszylindrisch konzipiert, wodurch sich die Abdichtung vereinfacht.

Die Funktion der Kopplungseinrichtung 5 wird mit Bezug auf die Figuren 3a bis 3c näher erläutert. In Fig. 3a befindet sich die Druckdose 18 in einer Ausgangsstellung. In dieser Ausgangsstellung drückt die Rückstellfeder 23 die Membran 20 in den Deckel 30 hinein in eine erste Endstellung. Durch Anlegen eines Unterdrucks über den Steueranschluss 21 an den Steuerraum 19 kann die Membran 20 in Richtung Grundkörper 29 bewegt werden, wodurch sie einen Hub 22 durchführt. Hierbei nimmt die Membran 20 die Antriebswelle 11 mit, wodurch die Antriebswelle 11 ihre lineare Bewegung 12 durchführt.

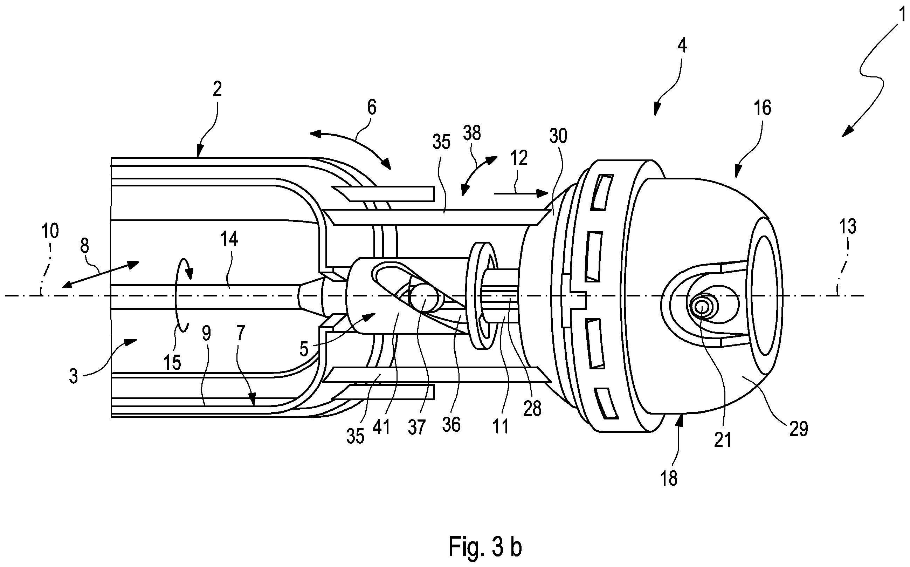

In Fig. 3b ist eine Zwischenstellung der Druckdose 16 wiedergegeben, in der die Antriebswelle 11 etwa einen halben Hub durchgeführt hat. Da die Antriebswelle 11 über die Linearführung 26 drehfest am Druckdosengehäuse 18 abgestützt ist, erzwingen die in die Schraubenführungen 36 eingreifenden Bolzen 37 eine Rotation des Führungsgehäuses 41. Da das Führungsgehäuse 41 drehfest mit der Klappenwelle 14 und diese drehfest mit der Klappe 3 verbunden ist, ergibt sich eine entsprechende Drehverstellung der Klappe 3 um die Schwenkachse 10.

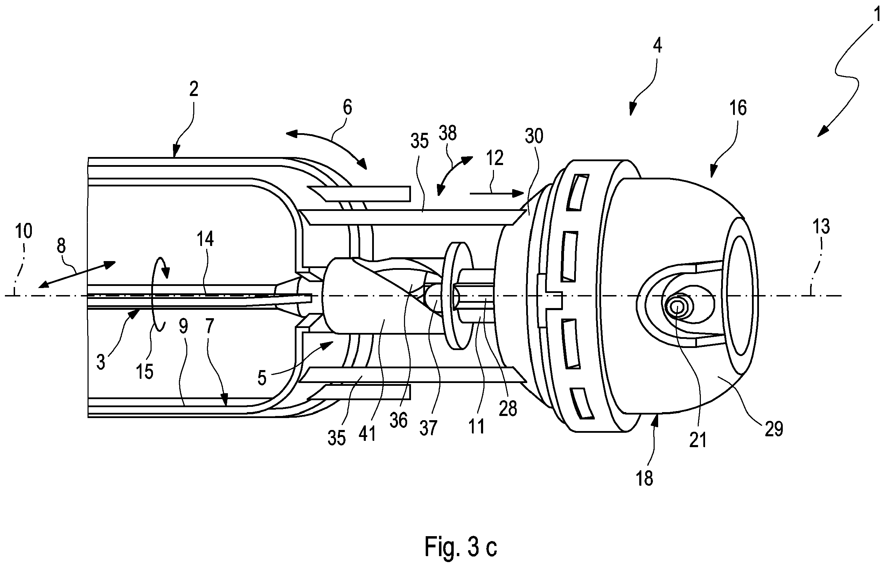

In Fig. 3c ist die Membran 20 maximal in den Grundkörper 29 hinein verstellt, so dass sie ihre zweite Endstellung erreicht. Auch die Antriebswelle 11 hat nun ihren maximalen Stellweg erreicht. Somit ist auch die Klappe 3 in diesem Endzustand maximal verstellt.

Im Ausgangszustand gemäß Fig. 3a ist die Klappe 3 in einer Schließstellung, in der sie den durchströmbaren Querschnitt 9 des Kanalabschnitts 7 versperrt. In der Endstellung gemäß Fig. 3c ist die Klappe 3 gegenüber der Ausgangsstellung um 90° verschwenkt, so dass sie den durchströmbaren Querschnitt 9 frei gibt. In der Zwischenstellung gemäß Fig. 3b ist die Klappe 3 beispielsweise um etwa 45° gegenüber der Ausgangsstellung verschwenkt. Um eine derartige 90°-Verschwenkung der Klappe 3 zu erzielen, erstreckt sich die jeweilige Schraubenführung 36 in der Umfangsrichtung über etwa 90°, wodurch bei maximalem Hub der Antriebswelle 11 bzw. der Membran 20 eine Vierteldrehung der Klappe 3 erreicht wird.

Wie sich insbesondere Fig. 1 entnehmen lässt, ist der durchströmbare Querschnitt 9 des Kanalabschnitts 7 gemäß einer bevorzugten Ausführungsform in einer parallel zur Schwenkachse 10 verlaufenden Breitenrichtung 46 größer dimensioniert als in einer quer dazu verlaufenden Höhenrichtung 47. Im Beispiel der Fig. 1 ist der durchströmbare Querschnitt 9 etwa fünf- bis sechsmal breiter als hoch. Des Weiteren ist hier vorgesehen, dass sich der durchströmbare Querschnitt 9 in der Breitenrichtung 46 mit zunehmendem Abstand von der Stelleinrichtung 4 verjüngt. Die Verjüngung ist hier kontinuierlich konzipiert. Beispielsweise nimmt die Höhe des durchströmbaren Querschnitts 9 über die gesamte Breite um etwa 25% ab.

Die Klappe 3 ist hier als Schmetterlingsklappe konzipiert, die hinsichtlich ihrer Kontur komplementär zur Geometrie des durchströmbaren Querschnitts 9 geformt ist.

Die Klappenwelle 14 besitzt distal und proximal zur Stelleinrichtung 4 jeweils einen Lagerabschnitt 48, der bevorzugt eine kreis-zylindrische Außenkontur besitzt. Der jeweilige Lagerabschnitt 48 ist dabei in einen Lagerbereich 49 des Gehäuses 2 bzw. des Kanalabschnitts 7 parallel zur Axialrichtung 8 eingesetzt. Im Beispiel ist die Klappe 3 mit ihrer Klappenwelle 14 und dem Führungsgehäuse 41 integral aus einem Stück hergestellt.

## Patentansprüche

1. Klappeneinrichtung zum Steuern einer Fluidströmung einer Brennkraftmaschine,
- mit einem Klappengehäuse (2), das wenigstens einen von der Fluidströmung in einer Axialrichtung (8) durchströmbaren Kanalabschnitt (7) in einer Umfangsrichtung (6) umschließt,
- mit wenigstens einer Klappe (3), die zum Steuern eines durchströmbaren Querschnitts (9) des Kanalabschnitts (7) um eine quer zur Axialrichtung (8) verlaufende Schwenkachse (10) im Klappengehäuse (2) verschwenkbar angeordnet ist,
- mit einer Stelleinrichtung (4) zum Antreiben der Klappe (3), die eine linear verstellbare Antriebswelle (11) aufweist,
- mit einer Kopplungseinrichtung (5), die eine drehfest mit der Klappe (3) verbundene, koaxial zur Schwenkachse (10) verlaufende Klappenwelle (14) mit der koaxial zur Schwenkachse (10) ausgerichteten Antriebswelle (11) koppelt, derart, dass sie lineare Bewegungen (12) der Antriebswelle (11) in Drehbewegungen (15) der Klappenwelle (14) umwandelt,
- wobei die Stelleinrichtung (4) als hydraulisch oder pneumatisch ansteuerbare Druckdose (16) ausgestaltet ist,
- wobei die Druckdose (16) in einem Druckdosengehäuse (18) einen Steuerraum (19) aufweist, der durch eine elastische Membran (20) begrenzt ist, die fest mit der Antriebswelle (11) verbunden ist, wobei das Druckdosengehäuse (18) einen mit dem Steuerraum (19) fluidisch verbundenen Steueranschluss (21) aufweist, über den der Steuerraum (19) zum Verstellen der Membran (20) mit einem Überdruck oder mit einem Unterdruck beaufschlagbar ist,
- wobei das Druckdosengehäuse (18) einen Grundkörper (29) und einen Deckel (30) aufweist, der eine der Klappe (3) zugewandte Montageöffnung (31) des Grundkörpers (29) verschließt,
- wobei der Deckel (30) integral am Klappengehäuse (2) ausgeformt ist,
- wobei die Kopplungseinrichtung (5) außerhalb des Druckdosengehäuses (18) angeordnet ist,
- wobei die Antriebswelle (11) durch einen Wandabschnitt (24) des Druckdosengehäuses (18) aus dem Druckdosengehäuse (18) herausgeführt ist, wobei zwischen der Antriebswelle (11) und dem Wandabschnitt (24) eine Drehmoment abstützende Linearführung (26) ausgebildet ist,
**dadurch gekennzeichnet,**
**dass** die Kopplungseinrichtung (5) axial zwischen einem Gehäuse (18) der Stelleinrichtung (4) und dem Klappengehäuse (2) angeordnet ist.

2. Klappeneinrichtung nach Anspruch 1,
**dadurch gekennzeichnet,**
**dass** die Kopplungseinrichtung (5) wenigstens eine sich koaxial zur Schwenkachse (10) schraubenförmig erstreckende, radial offene Schraubenführung (36) aufweist, in die ein Bolzen (37) eingreift.

3. Klappeneinrichtung nach Anspruch 2,
**dadurch gekennzeichnet,**
**dass** der jeweilige Bolzen (37) drehfest mit der Antriebswelle (11) verbunden ist und radial nach außen in die jeweilige Schraubenführung (36) eingreift, die drehfest mit der Klappenwelle (14) verbunden ist.

4. Klappeneinrichtung nach Anspruch 2 oder 3,
**dadurch gekennzeichnet,**
**dass** die Kopplungseinrichtung (5) ein Führungsgehäuse (41) aufweist, das drehfest mit der Klappenwelle (14) verbunden ist, das die wenigstens eine Schraubenführung (36) aufweist und das an einer der Stelleinrichtung (4) zugewandten Seite eine Einführöffnung (42) aufweist, durch welche die Antriebswelle (11) mit dem wenigstens einen Bolzen (37) in das Führungsgehäuse (41) eingeführt ist.

5. Klappeneinrichtung nach Anspruch 4,
**dadurch gekennzeichnet,**
**dass** das Führungsgehäuse (41) abgesehen von der Einführöffnung (42) nach außen geschlossen ist, wobei die Einführöffnung (42) mit einer Kappe (43) verschlossen ist, die eine Durchgangsöffnung (44) enthält, durch welche die Antriebswelle (11) hindurchgeführt ist.

6. Klappeneinrichtung nach Anspruch 5,
**dadurch gekennzeichnet,**
**dass** die Kappe (43) im Bereich der Durchgangsöffnung (44) eine Radialdichtung (45) aufweist, die außen an der Antriebswelle (11) anliegt.

7. Klappeneinrichtung nach einem der Ansprüche 1 bis 6,
**dadurch gekennzeichnet,**
**dass** der durchströmbare Querschnitt (9) des Kanalabschnitts (7) in einer parallel zur Schwenkachse (10) verlaufenden Breitenrichtung (46) mindestens zweimal oder mindestens dreimal größer ist als in einer quer dazu verlaufenden Höhenrichtung (47).

8. Klappeneinrichtung nach einem der Ansprüche 1 bis 7,
**dadurch gekennzeichnet,**
**dass** sich der durchströmbare Querschnitt (9) des Kanalabschnitts (7) in einer parallel zur Schwenkachse (10) verlaufenden Breitenrichtung (46) mit zunehmendem Abstand von der Stelleinrichtung (4) verjüngt.

9. Klappeneinrichtung nach einem der Ansprüche 1 bis 8,
**dadurch gekennzeichnet,**
**dass** die Kopplungseinrichtung (5) ein separates Gehäuse (41) aufweist, das mit der Klappenwelle (14) drehfest verbunden ist.

## Claims

1. Flap device for controlling a fluid flow of an internal combustion engine,
- with a flap housing (2) which surrounds in a circumferential direction (6) at least one channel section (7) through which the fluid flow can flow in an axial direction (8),
- with at least one flap (3) which, for controlling a cross-section (9) which can be flowed through of the channel section (7), is disposed pivotably in the flap housing (2) around a pivoting axis (10) extending perpendicularly to the axial direction (8),
- with an actuating device (4) for driving the flap (3), which has a linearly adjustable drive shaft (11),
- with a coupling device (5) which couples a flap shaft (14), which is non-rotatably connected with the flap (3) and extends coaxially to the pivoting axis (10), with the drive shaft (11) positioned coaxially to the pivoting axis (10), such that it transforms linear movements (12) of the drive shaft (11) into rotatory movements (15) of the flap shaft (14),
- wherein the actuating device (4) is formed as a hydraulically or pneumatically controllable pressurised container (16),
- wherein the pressurised container (16) has in a pressurised container housing (18) a control room (19) which is restricted by an elastic membrane (20), which is rigidly connected with the drive shaft (11), wherein the pressurised container housing (18) has a control connection (21) which is fluidically connected with the control room (19), through which control connection an overpressure or an under pressure can be applied to the control room (19) in order to adjust the membrane (20),
- wherein the pressurised container housing (18) has a basic body (29) and a lid (30) which closes an assembly opening (31), facing towards the flap (3), of the basic body (29),
- wherein the lid (30) is integrally formed with the flap housing (2),
- wherein the coupling device (5) disposed externally to the pressurised container housing (18),
- wherein the drive shaft (11) is drawn out of the pressurised container housing (18) through a wall section (24) of the pressurised container housing (18), wherein between the drive shaft (11) and the wall section (24) is formed a linear drive (26) which supports the torque,
**characterised in that** the coupling device (5) disposed axially between a housing (18) of the actuating device (4) and the flap housing (2).

2. Flap device according to claim 1, **characterised in that** the coupling device (5) has at least one radially open screw guide (36), extending in a screw shaped manner coaxially with respect to the pivoting axis (10), into which a bolt (37) engages.

3. Flap device according to claim 2, **characterised in that** each bolt (37) is connected non-rotatably with the drive shaft (11) and engages radially outwardly into the respective screw guide (36), which is connected non-rotatably with the flap shaft (14).

4. Flap device according to claim 2 or 3, **characterised in that** the coupling device (5) has a guide housing (41), which is connected non-rotatably with the flap shaft (14), which has the at least one screw guide (36) and which has at one side facing towards the actuating device (4) an engaging opening (42) through which the driveshaft (11) with the at least one bolt (37) is inserted into the guide housing (41).

5. Flap device according to claim 4, **characterised in that** the guide housing (41) with the exception of the engaging opening (42) is closed from the exterior, wherein the engaging opening (42) is closed with a cover (43) which contains a through opening (44) through which the drive shaft (11) is guided.

6. Flap device according to claim 5, **characterised in that** the cover (43) has in the region of the through opening (44) a radial seal (45) which abuts externally at the drive shaft (11).

7. Flap device according to one of claims 1 to 6, **characterised in that** the cross-section (9) which can be flowed through of the channel section (7) in a latitudinal direction (46) extending parallel to the pivoting axis (10) is at least two times or at least three times larger than in a height direction (47) extending perpendicularly thereto.

8. Flap device according to one of claims 1 to 7, **characterised in that** the cross-section (9) which can be flowed through of the channel section (7) in a latitudinal direction (46) extending parallel to the pivoting axis (10) tapers with increasing distance from the actuating device (4).

9. Flap device according to one of claims 1 to 8, **characterised in that** the coupling device (5) has a separate housing (41) which is non-rotatably connected with the flap shaft (14).

## Revendications

1. Dispositif de clapets pour commander un écoulement de fluide d'un moteur à combustion interne,
- avec un logement de clapet (2) qui entoure en direction périphérique (6) au moins un tronçon de canal (7) pouvant être parcouru en direction axiale (8) par l'écoulement de fluide,
- avec au moins un clapet (3) qui, pour commander une section transversale (9), pouvant être traversée par un fluide, du tronçon de canal (7), est pivotant dans le logement de clapet (2) autour d'un axe pivot (10) s'étendant transversalement à la direction axiale (8),
- avec un dispositif de réglage (4) qui est destiné à entraîner le clapet (3) et qui comporte un arbre d'entraînement (11) réglable linéairement,
- avec un dispositif de couplage (5) qui couple un arbre de clapet (14), relié au clapet (3) de manière solidaire en rotation et s'étendant de façon coaxiale à l'axe pivot (10), à l'arbre d'entraînement (11) orienté de façon coaxiale à l'axe pivot (10) de telle sorte qu'il transforme des mouvements linéaires (12) de l'arbre d'entraînement (11) en mouvements rotatifs (15) de l'arbre de clapet (14),
- dans lequel le dispositif de réglage (4) est réalisé comme un contenant sous pression (16) à commande hydraulique ou pneumatique,
- dans lequel le contenant sous pression (16) comporte dans un logement de contenant sous pression (18) un espace de commande (19) qui est limité par une membrane élastique (20) reliée de manière fixe à l'arbre d'entraînement (11), le logement de contenant sous pression (18) comportant un raccord de commande (21) qui est relié pour le fluide à l'espace de commande (19) et par l'intermédiaire duquel l'espace de commande (19) peut être soumis à une surpression ou à une dépression en vue du déplacement de la membrane (20),
- dans lequel le logement de contenant sous pression (18) comporte un corps de base (29) et un couvercle (30) qui ferme une ouverture de montage (31), proche du clapet (3), du corps de base (29),
- dans lequel le couvercle (30) est formé comme partie intégrante du logement de clapet (2),
- dans lequel le dispositif de couplage (5) est agencé à l'extérieur du logement de contenant sous pression (18),
- dans lequel l'arbre d'entraînement (11) est guidé à travers une partie de paroi (24) du logement de contenant sous pression (18) hors du logement de contenant sous pression (18), un guide linéaire (26) qui soutient un couple de rotation étant réalisé entre l'arbre d'entraînement (11) et la partie de paroi (24),
**caractérisé en ce**
**que** le dispositif de couplage (5) est agencé de façon axiale entre un logement (18) du dispositif de réglage (4) et le logement de clapet (2).

2. Dispositif de clapets selon la revendication 1,
**caractérisé en ce**
**que** le dispositif de couplage (5) comporte au moins un guide fileté (36) ouvert de façon radiale qui s'étend en forme de vis de façon coaxiale à l'axe pivot (10) et dans lequel pénètre un axe (37).

3. Dispositif de clapets selon la revendication 2,
**caractérisé en ce**
**que** l'axe respectif (37) est relié, solidaire en rotation, à l'arbre d'entraînement (11) et pénètre de façon radiale vers l'extérieur dans le guide fileté respectif (36) qui est relié, solidaire en rotation, à l'arbre de clapet (14).

4. Dispositif de clapets selon la revendication 2 ou 3,
**caractérisé en ce**
**que** le dispositif de couplage (5) comporte un logement de guidage (41) qui est relié, solidaire en rotation, à l'arbre d'entraînement (14), qui comporte l'au moins un guide fileté (36) et qui comporte au niveau d'un côté proche du dispositif de réglage (4) une ouverture d'introduction (42) par laquelle l'arbre d'entraînement (11) avec l'au moins un axe (37) est introduit dans le logement de guidage (41).

5. Dispositif de clapets selon la revendication 4,
**caractérisé en ce**
**que**, hormis l'ouverture d'introduction (42), le logement de guidage (41) est fermé vers l'extérieur, l'ouverture d'introduction (42) étant fermée vers l'extérieur avec un capuchon (43) qui contient une ouverture de passage (44) par laquelle est guidé l'arbre d'entraînement (11).

6. Dispositif de clapets selon la revendication 5,
**caractérisé en ce**
**que** le capuchon (43) comporte dans la zone de l'ouverture de passage (44) un joint d'étanchéité radial (45) qui s'appuie à l'extérieur à l'arbre d'entraînement (11).

7. Dispositif de clapets selon l'une quelconque des revendications 1 à 6,
**caractérisé en ce**
**que** la section transversale (9), pouvant être traversée par un fluide, du tronçon de canal (7) est, dans le sens de la largeur (46) s'étendant parallèlement à l'axe pivot (10), au moins deux fois ou au moins trois fois plus grande que dans le sens de la hauteur (47) transversalement audit sens de la largeur.

8. Dispositif de clapets selon l'une quelconque des revendications 1 à 7,
**caractérisé en ce**
**que** la section transversale (9), pouvant être traversée par un fluide, du tronçon de canal (7) se rétrécit dans le sens de la largeur (46) s'étendant parallèlement à l'axe pivot (10) lorsque la distance au dispositif de réglage (4) augmente.

9. Dispositif de clapets selon l'une quelconque des revendications 1 à 8,
**caractérisé en ce**
**que** le dispositif de couplage (5) comporte un logement séparé (41) qui est relié, solidaire en rotation, à l'arbre de clapet (14).
